# FASCICULE DE BREVET EUROPEEN

(11) **EP 2 534 358 B1**
(45) Date de publication et mention de la délivrance du brevet: **05.04.2017**
(21) Numéro de dépôt: 11708916.9
(22) Date de dépôt: 09.02.2011
(51) Int. Cl.: F01D 25/30, F01N 1/02, F02C 7/24, F02K 1/82

(54) **DISPOSITIF D'EJECTION DE GAZ D'UN MOTEUR A TURBINE A GAZ ET MOTEUR A TURBINE A GAZ**
VORRICHTUNG FÜR DEN GASAUSSTOSS AUS EINEM GASTURBINENMOTOR UND GASTURBINENMOTOR
DEVICE FOR EJECTING GAS FROM A GAS TURBINE ENGINE AND GAS TURBINE ENGINE

(30) Priorité: 12.02.2010 FR 1000592
(43) Date de publication de la demande: 19.12.2012
(73) Titulaire: Safran Helicopter Engines, 64510 Bordes (FR)
(72) Inventeur: BOUTY, Eric, Jean-Louis, F-64000 Pau (FR); REGAUD, Pierre-Luc, F-75001 Paris (FR); VALLON, Antoine, Yvan, Alexandre, F-64000 Pau (FR)
(74) Mandataire: Gevers & Orès
(86) Numéro de dépôt international: PCT/FR2011/050277
(87) Numéro de publication internationale: WO 2011/098729

(56) Documents cités:
- US-A- 2 988 302
- US-A- 3 002 341
- US-A- 3 215 172
- US-A- 3 437 173
- US-A- 4 244 441
- US-A- 4 817 756
- US-A1- 2007 125 089

## Description

L'invention concerne le domaine de la réduction du bruit d'un moteur à turbine à gaz.

Un moteur à turbine à gaz pour un aéronef tel qu'un avion ou un hélicoptère comprend généralement, d'amont en aval dans le sens de l'écoulement des gaz, un ou plusieurs étages de compresseurs, une chambre de combustion, un ou plusieurs étages de turbines, et un dispositif d'éjection des gaz tel qu'une tuyère.

Un problème constant des fabricants de moteurs est la réduction du bruit, par souci notamment du confort des passagers et des habitants des zones survolées par les aéronefs. En particulier, les hélicoptères se déplacent à proximité des zones habitées et le bruit émis par leur tuyère d'échappement forme une composante importante du bruit total qu'ils génèrent. L'atténuation du bruit émis par la tuyère peut être obtenue par l'utilisation d'un revêtement d'atténuation acoustique formant la paroi interne de la tuyère et donc l'enveloppe externe de la veine de gaz, voir par exemple US2988302, US4244441. Un tel revêtement peut par exemple comporter une tôle perforée débouchant sur une ou plusieurs cavités de résonnance, chaque ensemble d'une cavité et d'un ou plusieurs orifices formant un résonateur de Helmholtz. Les cavités peuvent par exemple être de structure du type à nids d'abeilles ou simplement formées par des cloisons transversales et/ou longitudinales.

De tels revêtements d'atténuation ou traitement acoustique permettent généralement l'atténuation des fréquences sonores dites moyennes, par exemple comprises entre 2 et 5kHz. Les fréquences sonores traitées dépendent notamment de la profondeur des cavités de résonance qui sont donc dimensionnées à cet effet.

Or, un moteur à turbine à gaz génère des bruits à différentes fréquences. Dans le cas d'un moteur à turbine à gaz pour hélicoptère, on constate généralement des pics de bruits dans une première gamme de (basses) fréquences autour de 0,5kHz et dans une deuxième gamme de (moyennes) fréquences autour de 2kHz. Si l'on peut assez aisément dimensionner les cavités de résonance pour atténuer les sons de la deuxième gamme de fréquences, il est en revanche assez difficile, en raison de contraintes d'encombrement, d'atténuer les sons de la première gamme de fréquences, puisque leur atténuation impliquerait l'utilisation de cavités trop profondes au vu du volume disponible. Or, ces sons à basses fréquences sont la source de bruits désagréables, en particulier au décollage de l'hélicoptère.

L'objectif de la présente invention est de proposer une tuyère de moteur à turbine à gaz permettant une atténuation efficace de plusieurs gammes de fréquences, en particulier de basses et de moyennes fréquences.

L'invention s'applique particulièrement bien à l'atténuation du bruit de tuyère d'un moteur à turbine à gaz d'hélicoptère. Toutefois, la Demanderesse n'entend pas restreindre l'étendue de la portée de ses droits à cette seule application, l'invention s'appliquant plus généralement à un dispositif d'éjection de gaz d'un moteur à turbine à gaz.

C'est ainsi que l'invention concerne un dispositif d'éjection de gaz d'un moteur à turbine à gaz comportant une paroi externe et une paroi interne délimitant entre elles une veine d'écoulement des gaz, la paroi interne formant un corps central définissant une cavité interne, la paroi externe étant perforée et communiquant avec au moins une cavité externe de résonnance pour l'atténuation de bruit dans une première gamme de fréquences sonores, comportant également des moyens de mise en communication fluidique des cavités externe et interne s'étendant au-travers de la veine d'écoulement des gaz, la cavité interne formant ainsi cavité de résonnance pour l'atténuation de bruit dans une deuxième gamme de fréquences sonores. Le dispositif est caractérisé par le fait que les moyens de mise en communication fluidique comportent des bras radiaux remplissant également une fonction de maintien mécanique du corps central.

Grâce à l'invention, il est possible d'atténuer les bruits de deux gammes de fréquences sonores sans augmentation de volume de la ou des cavités situées du côté externe de la veine de gaz. Ainsi, à encombrement égal, on peut atténuer des bruits qui ne pouvaient pas l'être dans l'art antérieur. Finalement, avec l'invention, les cavités externe et interne forment une cavité résonante unique pouvant traiter plusieurs gammes de fréquences sonores.

Selon une forme de réalisation préférée, les bras sont creux et débouchent dans la cavité externe de résonance au niveau de la paroi externe et dans la cavité interne de résonance au niveau de la paroi interne.

Selon une forme de réalisation préférée, la paroi interne comporte, de son côté interne, un revêtement d'atténuation acoustique.

Selon une forme de réalisation préférée, la première gamme de fréquences sonores correspond à des fréquences moyennes, par exemple centrées autour de 2kHz, et la deuxième gamme de fréquences sonores correspond à des fréquences basses, par exemple centrées autour de 0,5kHz.

On note que les cavités externe et interne pourraient alternativement atténuer une même gamme de fréquences sonores (les gammes de fréquences atténuées étant totalement ou partiellement superposées), l'objectif étant alors d'augmenter l'efficacité de l'atténuation sur cette gamme.

Selon une forme de réalisation préférée, la cavité interne et/ou la cavité externe est/sont cloisonnée(s) pour le réglage des fréquences qu'elles atténuent. Autrement dit, la ou les cavités comportent une ou plusieurs cloisons ; les volumes ménagés entre les cloisons peuvent être identiques ou différents. Ces volumes sont dimensionnés en fonction des fréquences sur lesquelles on souhaite accorder le traitement acoustique, de manière connue de l'homme du métier.

Selon une forme de réalisation dans ce cas, les cloisons remplissent également une fonction structurale.

Selon une forme de réalisation préférée, le dispositif d'éjection de gaz est une tuyère d'éjection de gaz d'un moteur à turbine à gaz.

L'invention concerne encore un moteur à turbine à gaz comportant un dispositif d'éjection de gaz tel que celui présenté ci-dessus.

L'invention sera mieux comprise à l'aide de la description suivante de la forme de réalisation préférée de l'invention, en référence aux planches de dessins annexées, sur lesquelles:
- la figure 1 représente une vue schématique en coupe d'un moteur à turbine à gaz pour hélicoptère avec une tuyère conforme à la forme de réalisation préférée de l'invention;
- la figure 2 est une vue en coupe axiale schématique de la tuyère du moteur de la figure 1 et

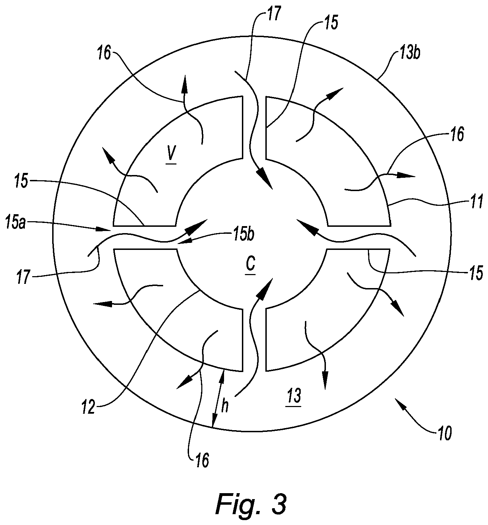

- la figure 3 est une vue de face, depuis le côté aval, de la tuyère de la figure 2.

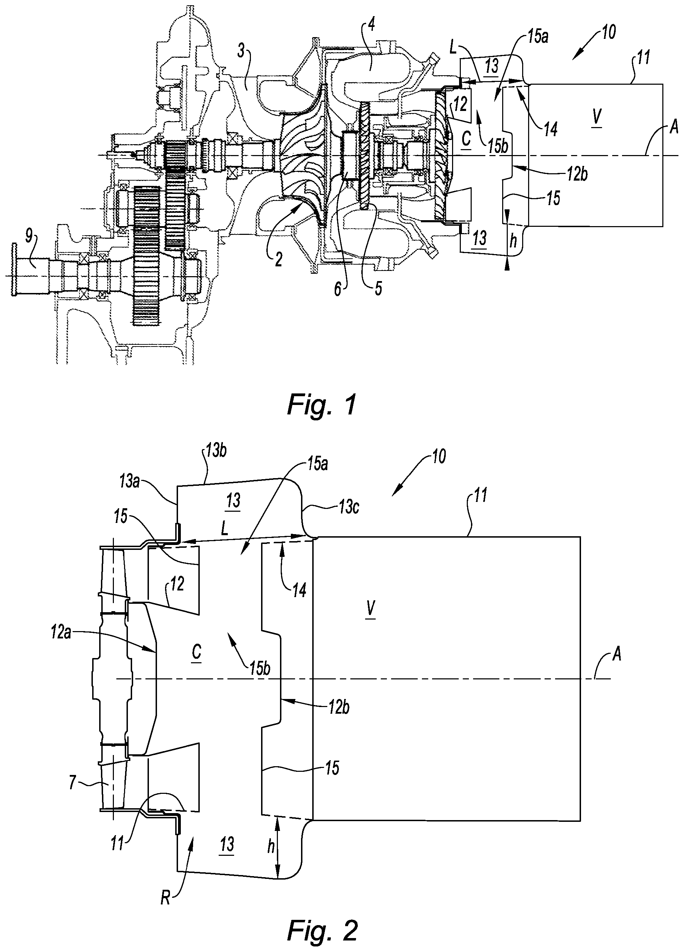

En référence à la figure 1, et de manière connue, un moteur d'hélicoptère à turbine à gaz comporte un compresseur 2 (en l'espèce centrifuge et à un seul étage) alimenté en air extérieur par un canal annulaire 3 d'entrée d'air, une chambre de combustion annulaire 4 (qui est ici à flux inversé) munie d'injecteurs (non représentés) permettant son alimentation en carburant pour la combustion des gaz comprimés en provenance du compresseur 2. Les gaz brûlés entraînent une première turbine 5 (en l'espèce à un seul étage), reliée au compresseur 2 par un arbre 6 qui les rend solidaires en rotation, et une deuxième turbine 7 dite de puissance (en l'espèce à un seul étage) reliée par un arbre à un engrenage permettant un transfert d'énergie mécanique depuis la turbine de puissance 7 vers un arbre de sortie 9 par exemple relié à un rotor entraînant des pales de l'hélicoptère.

En sortie de la turbine de puissance 7, le moteur comporte un dispositif d'éjection des gaz 10, en l'espèce une tuyère 10 d'éjection des gaz, dont la fonction est de guider les gaz d'échappement selon une veine V d'écoulement des gaz ou veine de gaz V, depuis l'amont vers l'aval.

La tuyère 10 (et donc ses parois 11, 12) s'étend globalement suivant un axe A. Sauf indication contraire, les notions de longitudinal, radial, transversal, interne ou externe sont utilisées, dans la suite de la description, en référence à cet axe A.

La tuyère 10 comporte une paroi ou carter externe 11 (de forme globalement cylindrique) et une paroi ou carter interne 12. La paroi interne 12 est moins longue longitudinalement que la paroi externe 11 et ne s'étend donc au droit que d'une partie amont de cette dernière. La paroi externe 11 délimite l'enveloppe externe de la veine de gaz V, tandis que la paroi interne 12 délimite l'enveloppe interne de la veine de gaz V (sur la portion amont correspondante); autrement dit, les gaz s'écoulent entre les parois interne 12 et externe 11. On parle parfois, concernant la paroi externe 11, de diffuseur.

La paroi interne 12 de la tuyère 10 forme un corps central 12 de la tuyère 10. Il se présente en l'espèce sous la forme d'une paroi à symétrie de révolution autour de l'axe A du turboréacteur; le corps central 12 est en l'espèce de forme tronconique et est fermé à son extrémité amont 12a et à son extrémité aval 12b (par des parois correspondantes visibles sur la figure 2). L'homme du métier désigne parfois un corps central de tuyère par sa dénomination anglaise "plug"; il le désigne aussi parfois par le mot "cône", puisqu'un corps central est souvent globalement de forme tronconique. On parlera dans la suite indifféremment de paroi interne 12 ou de corps central 12, ces deux notions étant confondues. Le corps central 12 définit une cavité interne C correspondant à son volume interne.

La tuyère 10 comporte par ailleurs une cavité externe 13, en l'espèce de forme annulaire et s'étendant autour d'une portion amont de la paroi externe 11 de la tuyère 10 située au moins en partie au droit du corps central 12. Cette cavité externe 13 est délimitée par des parois amont 13a, extérieure 13b et aval 13c ainsi que, du côté intérieur, par ladite portion amont de la paroi externe 11. La paroi externe 11 est perforée d'une pluralité d'orifices 14 (représentés de manière schématique sur la figure 1); ces orifices 14 remplissent une fonction de mise en communication fluidique de la veine de gaz V avec la cavité de résonance 13 pour l'atténuation de bruit et débouchent à cet effet de part et d'autre de la paroi interne 12; ils sont par exemple distribués selon une maille carrée mais tout type de distribution est envisageable. La paroi externe 11 est ici perforée sur toute sa surface amont correspondant à la cavité externe 13. La cavité externe 13 et la paroi externe perforée 11 forment un revêtement R d'atténuation acoustique du type résonateur quart d'onde. Ce revêtement R forme en l'espèce directement l'enveloppe externe de la tuyère.

La tuyère 10 comporte par ailleurs des bras radiaux 15 remplissant en l'espèce une fonction de maintien mécanique du corps central 12; ces bras 15 s'étendent entre la paroi externe 11 et la paroi interne 12 et sont fixés à chacune de ces parois 11, 12, par exemple par soudure ou encore par rivetage. Les bras radiaux 15 sont ici au nombre de quatre, répartis angulairement de manière régulière, c'est-à-dire diamétralement opposés deux à deux, les bras successifs 15 étant écartés de 90°. Plus généralement, le nombre de bras 15 est de préférence compris entre 3 et 5, les bras étant préférentiellement répartis de manière régulière angulairement.

Outre leur fonction de maintien mécanique du corps central 12, les bras 15 sont agencés pour mettre la cavité externe 13 et la cavité interne C en communication fluidique pour permettre au son de passer de l'une vers l'autre, permettant ainsi à la cavité interne C de former une cavité de résonnance pour l'atténuation des sons qui s'y propagent.

Plus précisément, les bras 15 sont creux et débouchent, de leur côté externe, dans la cavité externe 13, de leur côté interne, dans la cavité interne C. Ils sont en l'espèce complètement ouverts tant du côté externe 15a que du côté interne 15b, c'est-à-dire qu'ils sont ouverts, à leurs extrémités radiales externe 15a et interne 15b, selon toute leur section transversale à leur dimension radiale.

Conformément à une autre forme de réalisation non représentée, les bras 15 ne sont que partiellement ouverts à leur extrémité externe 15a et/ou à leur extrémité interne 15b; par exemple, un bras 15 peut comporter, au niveau de l'une et/ou l'autre de ses extrémités externe 15a et interne 15b, une tôle perforée séparant physiquement le volume intérieur du bras 15 de la cavité externe 13 et/ou interne C mais autorisant néanmoins une communication fluidique entre les volumes considérés. Cela permet, si cela est souhaitable, d'affiner le traitement acoustique par la couche résistive ainsi créée.

Quelle que soit la forme de réalisation, le son se propage, au-travers des perforations 14 de la paroi externe 11, depuis la veine de gaz V dans la cavité externe de résonance 13, comme illustré schématiquement par les flèches 16. La profondeur de la cavité externe 13 est dimensionnée (comme expliqué plus bas) pour permettre l'atténuation d'une première bande de fréquences sonores, en l'espèce une bande de fréquences moyennes centrée autour de 2 à 2,5kHz.

Grâce aux bras 15 de mise en communication fluidique des cavités externe 13 et interne C, le son se propage également depuis la cavité externe 13 dans la cavité interne C, comme illustré schématiquement par les flèches 17. Cela permet d'atténuer une deuxième bande de fréquences sonores dans la cavité de résonnance formée par la cavité interne C, dans laquelle se propage le son en provenance de la cavité externe 13 par l'intermédiaire des bras radiaux 15. De préférence, grâce au volume relativement important que peut définir le corps central 12 pour la cavité interne C, cette dernière peut permettre l'atténuation d'une gamme de fréquences basses par exemple comprises entre 0,3 et 1kHz.

L'atténuation de deux gammes de fréquences se fait sans utilisation de volume supplémentaire pour la tuyère 10 par rapport à une tuyère de l'art antérieur qui aurait comporté un corps central et une cavité externe semblable à celle de la tuyère 10; en effet, le volume supplémentaire utilisé pour l'atténuation acoustique est celui du corps central 12 qui est atteint, grâce aux bras radiaux 15, par l'intermédiaire de la cavité externe 13.

Les différents éléments constitutifs de la tuyère 10 sont de préférence métalliques, par exemple formés en acier à base nickel ou en titane.

Le réglage des gammes de fréquences traitées par la tuyère 10 se fait sur la base notamment du volume des cavités externe 13 et interne C.

Ainsi, l'accord en fréquence du revêtement externe R d'atténuation acoustique (c'est-à-dire la détermination des fréquences principales qu'il atténue) se fait notamment par le réglage du volume de la cavité externe 13 et plus particulièrement par le réglage de sa profondeur radiale. En effet, le revêtement d'atténuation acoustique R fonctionne selon le principe d'un résonateur dit "quart d'onde", c'est-à-dire d'un résonateur dont la profondeur est égale au quart de la longueur d'onde de la fréquence centrale de la bande de fréquences qu'il atténue. Ainsi, plus on souhaite atténuer des fréquences élevées, plus la profondeur radiale de la cavité 13 doit être faible. A contrario, plus on souhaite atténuer des fréquences basses, plus la profondeur radiale de la cavité 13 doit être importante. En fonction des fréquences à atténuer, la cavité 13 peut par ailleurs être partitionnée en une pluralité de cavités (les cloisons de partition pouvant être longitudinales ou transversales); on peut d'ailleurs dans ce cas utiliser une structure du type à nids d'abeilles; les cloisons de partition peuvent également remplir une fonction de maintien mécanique. La longueur L ou dimension longitudinale L de la cavité 13 agit quant à elle sur le taux ou l'efficacité de l'atténuation acoustique résultante.

Par exemple, pour atténuer une bande de fréquences centrée sur 2kHz, on peut prévoir une cavité unique 13 de profondeur radiale égale à 4cm, la paroi externe 11 présentant une porosité (rapport de la surface cumulée des orifices 14 sur la surface totale) de préférence comprise entre 5 et 10%, par exemple égale à 8%.

De même, l'accord en fréquence du corps central 12 se fait par réglage de son volume. Sa forme est donc adaptée aux fréquences les plus importantes que l'on souhaite atténuer, typiquement une gamme de fréquences centrée autour de 0,3 ou 0,5kHz. Le volume des bras radiaux 15 participe également à l'atténuation acoustique et peut être pris en compte. Conformément à la forme de réalisation décrite, le cône a une dimension longitudinale comprise entre 11 et 23cm et un rayon compris entre 6 et 12cm.

Selon une forme de réalisation non représentée, la cavité interne C et/ou la cavité externe 11 est/sont partitionnée(s) par au moins une cloison pour le réglage des fréquences du bruit qu'elles atténuent. Cette ou ces cloisons peut ou peuvent également remplir une fonction structurale de raidisseur(s).

Selon une forme de réalisation non représentée, pour améliorer encore l'atténuation acoustique obtenue par le corps central 12, ce dernier comporte, du côté interne de la paroi interne 12, un revêtement d'atténuation acoustique. Cela est particulièrement avantageux dans la mesure où, la cavité interne C n'étant pas directement soumise au flux de gaz d'échappement, il est possible d'utiliser, pour ce revêtement, des matériaux qui ne sont traditionnellement pas utilisables pour le traitement d'une paroi externe de tuyère car incompatibles avec les conditions auxquelles ils seraient soumis par les gaz d'échappement.

Le corps central 12 a été décrit de forme tronconique. On note qu'en fonction du moteur et de ses contraintes aérodynamiques, il peut présenter d'autres formes à symétrie de révolution (par exemple une forme cylindrique). Il peut également ne pas être à symétrie de révolution, pour des motifs de réduction du bruit du jet de gaz ou de réduction de la signature infrarouge; le corps central peut présenter dans ce cas une section transversale de forme ondulée, rectangulaire ou elliptique, par exemple. La présente invention s'applique à toutes les formes de corps centraux, dans la mesure où ils peuvent définir une cavité de résonance reliée à la cavité externe de la tuyère par des moyens s'étendant au-travers de la veine de gaz V.

On note par ailleurs que le corps central 12 peut remplir, dans certains moteurs à turbine à gaz et en particulier dans les turboréacteurs pour avions, une autre fonction, qui est de guider le flux de dégazage du moteur. Il est en effet prévu, sur certains moteurs, à l'extrémité aval de son arbre central, un orifice de dégazage, par lequel s'échappent divers fluides tels que de la vapeur d'huile, certains gaz de refroidissement, etc. On parle généralement de déshuileur. Dans ce cas, soit un tuyau de guidage du flux de dégazage s'étend au sein du corps central jusqu'à son extrémité, pour un guidage canalisé du flux de dégazage, soit aucun tuyau n'est prévu, le corps central assurant, par sa surface interne, le guidage du flux de dégazage. Le dégazage se fait généralement par aspiration, la pression au sein du tuyau ou du corps central étant inférieure à la pression dans l'enceinte du turboréacteur. Cette fonction de guidage du flux de dégazage peut être combinée à la fonction de cavité de résonnance de l'invention.

On note par ailleurs que des cavités de résonnance peuvent également être prévues en aval de la cavité externe 13, pour améliorer encore l'atténuation acoustique.

On note encore qu'un éjecteur (alimentant la tuyère en un flux de gaz secondaire) peut être prévu dans la tuyère, la présence d'un tel éjecteur n'étant pas incompatible avec l'invention.

Dans les moteurs où cela est nécessaire, les bras radiaux 15 peuvent également permettre le passage de servitudes telles que câbles ou harnais électriques, canalisations de transport de fluide, etc.

L'invention a été présentée en relation avec une tuyère rectiligne suivant un axe A. Selon une forme de réalisation non représentée, la tuyère peut être de forme courbe, ce qui peut être utile dans l'application à un hélicoptère; une telle forme de réalisation n'est pas incompatible avec l'invention.

## Revendications

1. Dispositif d'éjection de gaz d'un moteur à turbine à gaz comportant une paroi externe (11) et une paroi interne (12) délimitant entre elles une veine (V) d'écoulement des gaz, la paroi interne (12) formant un corps central (12) définissant une cavité interne (C), la paroi externe (11) étant perforée et communiquant avec au moins une cavité externe (13) de résonnance pour l'atténuation de bruit dans une première gamme de fréquences sonores, comportant également des moyens (15) de mise en communication fluidique des cavités externe (13) et interne (C) s'étendant au-travers de la veine d'écoulement des gaz (V), la cavité interne (C) formant ainsi cavité de résonnance pour l'atténuation de bruit dans une deuxième gamme de fréquences sonores, **caractérisé par le fait que** les moyens (15) de mise en communication fluidique comportent des bras radiaux (15) remplissant également une fonction de maintien mécanique du corps central (12).

2. Dispositif d'éjection de gaz selon la revendication 1, dans lequel les bras (15) sont creux et débouchent dans la cavité externe de résonance (13) au niveau de la paroi externe (11) et dans la cavité interne de résonance (C) au niveau de la paroi interne (12).

3. Dispositif d'éjection de gaz selon la revendication 1 ou 2, dans lequel la paroi interne (12) comporte, de son côté interne, un revêtement d'atténuation acoustique.

4. Dispositif d'éjection de gaz selon l'une des revendications 1 à 3, dans lequel la première gamme de fréquences sonores correspond à des fréquences moyennes, par exemple centrées autour de 2kHz, et la deuxième gamme de fréquences sonores correspond à des fréquences basses, par exemple centrées autour de 0,5kHz.

5. Dispositif d'éjection de gaz selon l'une des revendications 1 à 4 dans lequel la cavité interne (C) et/ou la cavité externe (11) comportent au moins une cloison pour le réglage des fréquences du bruit qu'elles atténuent.

6. Dispositif d'éjection des gaz selon la revendication 5 dans lequel la cloison (7) remplit également une fonction structurale.

7. Dispositif d'éjection de gaz selon l'une des revendications 1 à 6 qui est une tuyère d'éjection de gaz d'un moteur à turbine à gaz.

8. Moteur à turbine à gaz comportant un dispositif d'éjection de gaz selon l'une des revendications 1 à 7.

## Patentansprüche

1. Vorrichtung zur Ejektion von Gas eines Gasturbinentriebwerks, die eine Außenwand (11) und eine Innenwand (12) umfasst, die zwischen sich eine Ader (V) zur Strömung von Gas begrenzen, wobei die Innenwand (12) einen zentralen Körper (12) bildet, der eine innere Kavität (C) definiert, wobei die Außenwand (11) perforiert ist und mit mindestens einer externen Kavität (13) zur Resonanz für eine Geräuschdämpfung in einem ersten Bereich von akustischen Frequenzen in Verbindung steht, auch Mittel (15) zur Herstellung einer Fluidverbindung von der externen (13) und der inneren Kavität (C) umfasst, die sich durch die Ader (V) zur Strömung von Gas erstrecken, wobei die innere Kavität (C) so die Kavität zur Resonanz für eine Geräuschdämpfung in einem zweiten Bereich von akustischen Frequenzen bildet, **dadurch gekennzeichnet, dass** die Mittel (15) zur Herstellung einer Fluidverbindung radiale Arme (15) umfassen, die auch eine mechanische Stützfunktion des zentralen Körpers (12) erfüllen.

2. Vorrichtung zur Ejektion von Gas gemäß Anspruch 1, wobei die Arme (15) hohl sind und in der äußeren Kavität zur Resonanz (13) an der Außenwand (11) und in der inneren Kavität zur Resonanz (C) an der Innenwand (12) münden.

3. Vorrichtung zur Ejektion von Gas gemäß Anspruch 1 oder 2, wobei die Innenwand (12) auf ihrer Innenseite eine akustische Dämpfungsschicht umfasst.

4. Vorrichtung zur Ejektion von Gas gemäß einem der Ansprüche 1 bis 3, wobei der erste Bereich von akustischen Frequenzen durchschnittlichen Frequenzen entspricht, die beispielsweise um 2 kHz zentriert sind, und dass der zweite Bereich von akustischen Frequenzen niedrigen Frequenzen entspricht, die beispielsweise um 0,5 kHz zentriert sind.

5. Vorrichtung zur Ejektion von Gas gemäß einem der Ansprüche 1 bis 4, wobei die innere Kavität (C) und / oder die externe Kavität (11) mindestens eine Trennwand für die Einstellung der Rauschfrequenzen umfassen, die sie abschwächen.

6. Vorrichtung zur Ejektion von Gas gemäß Anspruch 5, wobei die Trennwand (7) auch eine strukturelle Funktion erfüllt.

7. Vorrichtung zur Ejektion von Gas gemäß einem der Ansprüche 1 bis 6, die eine Düse zur Ejektion von Gas eines Gasturbinentriebwerks ist.

8. Gasturbinentriebwerk, das eine Vorrichtung zur Ejektion von Gas nach einem der Ansprüche 1 bis 7 umfasst.

## Claims

1. A device for ejecting gas from a gas turbine engine comprising an external wall (11) and an internal wall (12) defining therebetween a gas flow stream (V), the internal wall (12) forming a central body (12) defining an internal cavity (C), the external wall (11) being perforated and communicating with at least one external resonance cavity (13) for the attenuation of noise in a first range of sound frequencies, also comprising means (15) for placing the external cavity (13) and internal cavity (C) in fluidic communication, extending through the gas flow stream (V), the internal cavity (C) thus forming a resonance cavity for the attenuation of noise in a second range of sound frequencies, **characterized in that** the means (15) for placing in fluidic communication comprise radial arms (15) which also fulfill the function of mechanical retention of the central body (12).

2. The device for ejecting gas as claimed in claim 1, in which the arms (15) are hollow and open into the external resonance cavity (13) in the region of the external wall (11) and into the internal resonance cavity (C) in the region of the internal wall (12).

3. The device for ejecting gas as claimed in claim 1 or 2, in which the internal wall (12) comprises an acoustic attenuation casing on its internal side.

4. The device for ejecting gas as claimed in claims 1 to 3, in which the first range of sound frequencies corresponds to medium frequencies, for example centered around 2 kHz, and the second range of sound frequencies corresponds to low frequencies, for example centered around 0.5 kHz.

5. The device for ejecting gas as claimed in one of claims 1 to 4, in which the internal cavity (C) and/or the external cavity (11) comprise at least one partition for adjusting the frequencies of the noise which they attenuate.

6. The device for ejecting gas as claimed in claim 5, in which the partition (7) also fulfills a structural function.

7. The device for ejecting gas as claimed in one of claims 1 to 6, which is a gas ejection nozzle of a gas turbine engine.

8. A gas turbine engine comprising a device for ejecting gas as claimed in one of claims 1 to 7.
